# EUROPEAN PATENT APPLICATION

(11) **EP 1 622 341 A2**
(43) Date of publication of application: **01.02.2006**
(21) Application number: 05016208.0
(22) Date of filing: 26.07.2005
(51) Int. Cl.: H04M 1/02, H04N 5/907, H04H 1/00

(54) **Method and system for recording content comprising a mobile terminal**

(30) Priority: 27.07.2004 JP 2004218709
(71) Applicant: SANYO ELECTRIC CO., LTD., Moriguchi-shi, Osaka 570 (JP)
(72) Inventor: Matsunami, Kanako, Daito-shi, Osaka (JP)
(74) Representative: Glawe, Delfs, Moll

(57) **Abstract**

A mobile terminal recording system includes a mobile terminal and a cradle. The mobile terminal creates video recording reservation information of a desired TV program, and sends the created video recording reservation information to the cradle. The cradle that has received the video recording reservation information performs a video recording reservation of the TV program on the basis of the video recording reservation information, and starts to record the TV program when a broadcast start time has come. After completion of recording, when the mobile terminal is set to the cradle, the record data of the TV program recorded in the cradle is transferred form the cradle to the mobile phone. The transferred record data is reproduced by the mobile terminal.

## Description

### BACKGROUND OF THE INVENTION

### Field of the invention

The present invention relates to a mobile terminal recording system. More specifically, the present invention relates to a mobile terminal recording system including a mobile terminal and a base to which the mobile terminal is set.

### Description of the prior art

In an example of such a kind of conventional mobile terminal recording system, the user, when cannot view a desired TV program at a broadcast time of the TV program, creates video recording reservation information by the mobile terminal, and sends the created video recording reservation information to a home server placed at home. The home server that has received the video recording reservation information performs video recording reservation on the TV program, and starts to record the TV program when a broadcast start time has come. After completion of the recording, when the user requests the home server to transfer record data of the TV program to the mobile terminal, the record data is transferred from the home server to the mobile terminal. Thus, the user reproduces the record data of the desired TV program by the mobile terminal to view and listen to it.

However, in the prior art, when sending the record data from the home server recording the desired TV program to the mobile terminal, there is a problem of complicating transfer control of the record data.

### SUMMARY OF THE INVENTION

Therefore, it is a primary object of the present invention to provide a novel mobile terminal recording system.

A further object of the present invention is to provide a mobile terminal recording system capable of simplifying transfer control of record data from a base to a mobile terminal.

The invention according to claim 1 is a mobile terminal recording system including a mobile terminal and a base to which the mobile terminal is set. The mobile terminal includes: a content acceptor for accepting a content transferred from the base; and a first recorder for recording the content accepted by the content acceptor, and the base includes: a content receiver for receiving a content; a second recorder for recording the content received by the content receiver; and a first data transferor for transferring the content recorded in the second recorder to the mobile terminal when the mobile terminal is set.

In the invention according to claim 1, the base receives the content, and records the received content in the second recorder. Next, when the mobile terminal is set to the base, the content recorded in the second recorder is transferred to the mobile terminal. The mobile terminal accepts the content transferred from the base, and records the accepted content in the first recorder.

That is, when the mobile terminal is set to the base, the base transfers the content recorded in the second recorder to the mobile terminal. Thus, it is possible to simplify transfer control of the content when the content is sent from the base to the mobile terminal.

An invention according to claim 2 is a mobile terminal recording system, and is dependent on claim 1. The mobile terminal further includes: a message receiver for receiving an unrecordable message from the base; and a first display for displaying the unrecordable message received by the message receiver, and the base further includes: a first capacity detector for detecting an available area of the second recorder; a first determiner for determining whether or not the detected available area of the second recorder is larger than a data amount of the content calculated on the basis of the video recording reservation information; and a message sender for sending an unrecordable message to the mobile terminal when the determination result by the first determiner is negative.

In the invention according to claim 2, the amount of the available area of the second recorder of the base is detected, and the detected data amount is compared with the data amount of the content calculated on the basis of the video recording reservation information. Thus, in a case that the available area of the second recorder is smaller than the calculated data amount of the content, the base sends the unrecordable message to the mobile terminal. The mobile terminal receiving the unrecordable message from the base displays the unrecordable message on the first display. In this case, the user can determine whether or not the content is recordable in the second recorder of the base on the basis of the video recording reservation information by viewing the first display on the mobile terminal.

The invention according to claim 3 is a mobile terminal recording system, and is dependent on claim 1 or 2. The mobile terminal further includes: a second capacity detector for detecting an available area of the first recorder; a first transfer suspension requestor for requesting the base to suspend transfer of the content when the available area of the first recorder cannot be detected by the second capacity detector; a first data eraser for erasing a content recorded in the first recorder; and a first transfer requestor for requesting the base to transfer the content when the available area is reserved in the first recorder by the first data eraser, and the base, further includes: a first suspension request acceptor for accepting the transfer suspension request from the mobile terminal; a first data transfer suspender for suspending transfer of the content to the mobile terminal on the basis of the transfer suspension request accepted by the first suspension request acceptor; a first transfer request acceptor for accepting a transfer request of the content from the mobile terminal; and a second data transferor for transferring the content recorded in the second recorder to the mobile terminal on the basis of the transfer request of the content accepted by the first transfer request acceptor.

In the invention according to claim 3, the mobile terminal detects the available area of the first recorder, and requests the base to suspend the transfer of the content when the available area cannot be detected. The base, when accepting the transfer suspension request from the mobile terminal, suspends the transfer of the content to the mobile terminal. Then, the mobile terminal, when reserving the available area in the first recorder by erasing the content recorded in the first recorder, requests the base to transfer the content. The base, when receiving the transfer request from the mobile terminal, sends the content recorded in the second recorder to the mobile terminal.

That is, when detecting no available area in the first recorder during transfer of the content from the base to the mobile terminal, the mobile terminal requests the base to suspend the transfer of the content. Then, the mobile terminal reserves the available area in the first recorder by erasing the unnecessary content recorded in the first recorder, and then causes the base to send the content. In this case, even if the available area of the first recorder runs out during transfer of the content, the mobile terminal can record the content transferred from the base in the first recorder by automatically reserving the available area.

The invention according to claim 4 is a mobile terminal recording system, and is dependent on any one of claims 1 to 3. The mobile terminal further includes: a message acceptor for accepting a transfer finish message of the content notified from the base; and a second display for displaying the transfer finish message accepted by the message acceptor, and the base, further includes: a second data eraser for erasing the content recorded in the second recorder after completion of transferring the content recorded in the second recorder by the data transferor; and a message notifier for notifying the transfer finish message to the mobile terminal.

In the invention according to claim 4, after completion of the transfer of the content recorded in the second recorder, the base erases the content recorded in the second recorder, and notifies the transfer finish message of the content to the mobile terminal. The mobile terminal, when accepting the transfer finish message, displays the completion of the transfer of the content on the second display. In this case, after completion of the transfer of the content from the base to the mobile terminal, the content recorded in the second recorder of the base is erased, which allows the base to record a new content. Furthermore, the user can know the completion of the transfer of the content by the second display of the mobile terminal. Thus, the user can remove the mobile terminal from the base at a time of completion of the transfer of the content.

The invention according to claim 5 is a mobile terminal recording system, and is dependent on any one of claims 1 to 4. The mobile terminal further includes: a battery for supplying an electric power to the mobile terminal; a first measure for measuring a voltage of the battery; a second determiner for determining whether or not the voltage measured by the first measure is larger than a first threshold value; a second transfer suspension requester for requesting the base to suspend transfer of the content when the determination result by the second determiner is negative ; a first charger for charging the battery; and a second transfer requester for requesting the base to transfer the content when the determination result by the second determiner becomes affirmative through the charge by the first charger, and the base further includes: a second suspension request acceptor for accepting the transfer suspension request of the content from the mobile terminal; a second data transfer suspender for suspending the transfer of the content to the mobile terminal on the basis of the transfer suspension request accepted by the second suspension request acceptor; a second transfer request acceptor for accepting the transfer request of the content from the mobile terminal; and a third data transferor for transferring the content to the mobile terminal when the transfer request is accepted by the second transfer request acceptor.

In the invention according to claim 5, the mobile terminal measures the voltage of the battery for supplying an electric power to the mobile terminal, and determines whether or not the measured voltage is larger than the first threshold value. Thus, in a case that the measured voltage is smaller than the first threshold value, the mobile terminal requests the base to suspend the transfer of the content. The base, when accepting the transfer suspension request from the mobile terminal, suspends the transfer of the content to the mobile terminal. Next, the mobile terminal charges the battery by the first charger. When the battery is charged to make the measured voltage larger than the first threshold value, the mobile terminal requests the base to transfer the content. The base, when accepting the transfer request of the content, sends the content to the mobile terminal.

That is, when the mobile terminal detects that the voltage of the battery is smaller than the first threshold value during the transfer of the content from the base to the mobile terminal, the mobile terminal requests the base to suspend the transfer of the content. Then, when the battery is charged by the first charger to make the voltage of the battery larger than the first threshold value, the mobile terminal causes the base to transfer the content. In this case, when the voltage of the battery is smaller than the first threshold value during transferring the content, the mobile terminal can record the content transferred from the base in the first recorder by automatically charging the battery.

The invention according to claim 6 is a mobile terminal recording system, and is dependent on any one of claims 1 to 5. The mobile terminal further includes: a second measure for measuring a voltage of the battery; a third determiner for determining whether or not the voltage measured by the second measure is larger than a second threshold value being larger than the first threshold value; a second charger for charging the battery when the determination result by the third determiner is negative; and a third display for displaying completion of the charge of the battery when the determination result by the third determiner becomes affirmative through the charge by the second charger, and the base further includes an electric power supplier for supplying an electric power to the second charger.

In the invention according to claim 6, the mobile terminal compares the voltage of the battery with the second threshold value being larger than the first threshold value. Where the second threshold value is larger than the voltage of the battery, the mobile terminal charges the battery by the second charger. After charging the battery, the voltage of the battery is further compared with the second threshold value, and in high voltage of the battery, the third display displays the completion of the charge. Furthermore, by an electric power supplier of the base, the electric power is supplied to the second charger. In this case, setting the mobile terminal to the base allows the content to be transferred from the mobile terminal as well as the battery to be charged.

The invention according to claim 7 is a mobile terminal recording system, and is dependent on any one of claims 1 to 6. The first threshold value is a voltage of the battery required to record the content transferred from at least the base in the first recorder. In this case, it is possible to record the content transferred from at least the base in the first recorder.

The invention according to claim 8 is a mobile terminal recording system, and is dependent on any one of claims 1 to 7. Sending and receiving the unrecordable message by the message sender and the message receiver are sent and received through Bluetooth. In this case, an unrecordable message can be sent and received between the mobile terminal and the base even within a distance allowing for sending and receiving through Bluetooth irrespective of presence of an obstacle.

The invention according to claim 9 is a mobile terminal recording system, and is dependent on any one of claims 1 to 7. Sending and receiving the unrecordable message by the message sender and the message receiver are sent and received over a telephone line. In this case, it is possible to send and receive the unrecordable message irrespective of the distance between the mobile terminal and the base.

The invention according to claim 10 is a method of recording a content by a mobile terminal recording system including a mobile terminal and a base to which the mobile terminal is set. This comprising steps of: (a) receiving a content by the base; (b) recording the received content in a first recording medium of the base; (c) transferring the content recorded in the first recording medium to the mobile terminal when the mobile terminal is set to the base; (d) accepting the content transferred from the base by the mobile terminal; and (e) recording the accepted content in the second recording medium of the mobile terminal.

In the invention according claim 10, the base receives the content, and records the received content in the first recording medium. Next, when the mobile terminal is set to the base, the content recorded in the first recording medium is transferred to the mobile terminal. The mobile terminal accepts the content transferred from the base, and records the accepted content in the second recording medium.

That is, when the mobile terminal is set to the base, the base transfers the content recorded in the first recording medium to the mobile terminal. Thus, it is possible to simplify transfer control of the content at a time of sending the content from the base to the mobile terminal.

The invention according to claim 11 is a method of recording a content by a mobile terminal recording system, and is dependent on claim 10. This comprises following steps of (a) detecting an available area of the first recording medium by the base; (b) determining whether or not the available area of the detected first recording medium is larger than a data amount of the content calculated on the basis of the video recording reservation information; (c) sending an unrecordable message to the mobile terminal when the determination result is negative; (d) receiving the unrecordable message from the base by the mobile terminal; and (e) displaying the received unrecordable message on the mobile terminal.

In the invention according to claim 11, the amount of the available area of the first recording medium is detected by the base, and the detected amount of the available area and the data amount calculated on the basis of the video recording reservation information are compared with each other. In a case that the available area of the first recording medium is smaller than the calculated data amount of the content, the base sends the unrecordable message to the mobile terminal. The mobile terminal that has received the unrecordable message from the base displays the unrecordable message. In this case, it is possible for the user to determine whether or not the content is recordable in the second recorder of the base on the basis of the video recording reservation information by viewing the display on the mobile terminal.

The invention according to claim 12 is a method of recording a content by a mobile terminal recording system, and is dependent on claim 10 or 11. This comprises following steps of (a) detecting an available area of the second recording medium; (b) requesting the base to suspend the transfer of the content when the available area of the second recording medium cannot be detected; (c) accepting the transfer suspension request from the mobile terminal by the base; (d) suspending the transfer of the content to the mobile terminal on the basis of the accepted transfer suspension request; (e) erasing the content recorded in the second recording medium; (f) requesting the base to transfer the content by the mobile terminal when the available area is reserved in the second recording medium; (g) accepting the transfer request of the content from the base by the mobile terminal; and (h) transferring the content recorded in the first recording medium to the mobile terminal on the basis of the accepted transfer request of the content.

In the invention according to claim 12, the mobile terminal detects the available area of the second recording medium, and requests the base to suspend the transfer of the content when the available area cannot be detected. The base, when accepting the transfer suspension request of the content from the mobile terminal, suspends the transfer of the content to the mobile terminal. Then, when the mobile terminal reserves the available area in the second recording medium by erasing the content recorded in the second recording medium, it requests the base to transfer the content. The base, when accepting the transfer request of the content from the mobile terminal, sends the content recorded in the first recording medium to the mobile terminal.

That is, when the mobile terminal detects that the available area of the second recording medium runs out during transfer of the content from the base to the mobile terminal, it requests the base to suspend the transfer of the content. Then, after reserving the available area in the second recording medium by erasing the unnecessary content recorded in the second recording medium, the mobile terminal causes the base to transfer the content. In this case, even if the available area runs out in the second recording medium during the transfer of the content, the mobile terminal can record the content transferred from the base in the second recording medium by automatically reserving the available area.

The invention according to claim 13 is a method of recording a content by a mobile terminal recording system, and is dependent on claims 10 to 12. This comprises following steps of (a) measuring a voltage of a battery supplying an electric power to the mobile terminal by the mobile terminal, (b) determining whether or not the measured voltage is larger than a threshold value; (c) requesting the base to suspend the transfer of the content when the determination result is negative, (d) accepting the transfer suspension request of the content from the mobile terminal by the base; (e) suspending the transfer of the content to the mobile terminal on the basis of the accepted transfer suspension request; (f) charging the battery by the base; (g) requesting the base to transfer the content when the determination result after charge is affirmative; (h) accepting the transfer request of the content from the mobile terminal by the base; and (i) transferring the content to the mobile terminal when the transfer request is accepted.

In the invention according to claim 13, the mobile terminal measures the voltage of the battery for supplying the electric power to the mobile terminal, and determines whether or not the measured voltage is larger than the threshold value. In a case that the measured voltage is smaller than the threshold value, the mobile terminal requests the base to suspend the transfer of the content. The base, when accepting the transfer suspension request from the mobile terminal, suspends the transfer of the content to the mobile terminal. Next, the mobile terminal charges the battery. When the battery is charged to make the measured voltage of the battery larger than the threshold value, the mobile terminal requests the base to transfer the content. The base, when accepting the transfer request of the content, sends the content to the mobile terminal.

That is, when the mobile terminal detects that the voltage of the battery is smaller than the threshold value during the transfer of the content from the base to the mobile terminal, it requests the base to suspend the transfer of the content. Then, when the battery is charged to make the voltage of the battery larger than the threshold value, the mobile terminal causes the base to transfer the content. In this case, when the voltage of the battery is smaller than the threshold value during the transfer of the content, the mobile terminal can record the content transferred from the base in the second recording medium by automatically charging the battery.

According to the present invention, in the mobile terminal recording system, setting the mobile terminal to the base allows the content recorded in the base to be sent to the mobile terminal, and therefore, it is possible to simplify transfer control of the content from the base to the mobile terminal.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is an illustrative view showing one embodiment of the present invention;
Figure 2 is a block diagram showing a mobile phone in Figure 1 embodiment;
Figure 3 is block diagram showing a cradle in Figure 1 embodiment;
Figure 4 is an illustrative view showing appearance of the mobile phone in Figure 1 embodiment;
Figure 5 is an illustrative view showing a screen of a monitor of the mobile phone in Figure 1 embodiment;
Figure 6 is an illustrative view showing a flow of an operation of Figure 1 embodiment;
Figure 7 is an illustrative view showing a flow of another operation of Figure 1 embodiment;
Figure 8 is a flowchart showing a part of an operation of Figure 1 embodiment;
Figure 9 is a flowchart showing another part of the operation of Figure 1 embodiment;
Figure 10 is a flowchart showing the other part of the operation of Figure 1 embodiment;
Figure 11 is a flowchart showing a further part of the operation of Figure 1 embodiment;
Figure 12 is a flowchart showing another part of the operation of Figure 1 embodiment; and
Figure 13 is a flowchart showing the other part of the operation of Figure 1 embodiment.

### DETAILED DESCRIPTION OF THE PREFERRED EMBODIMENTS

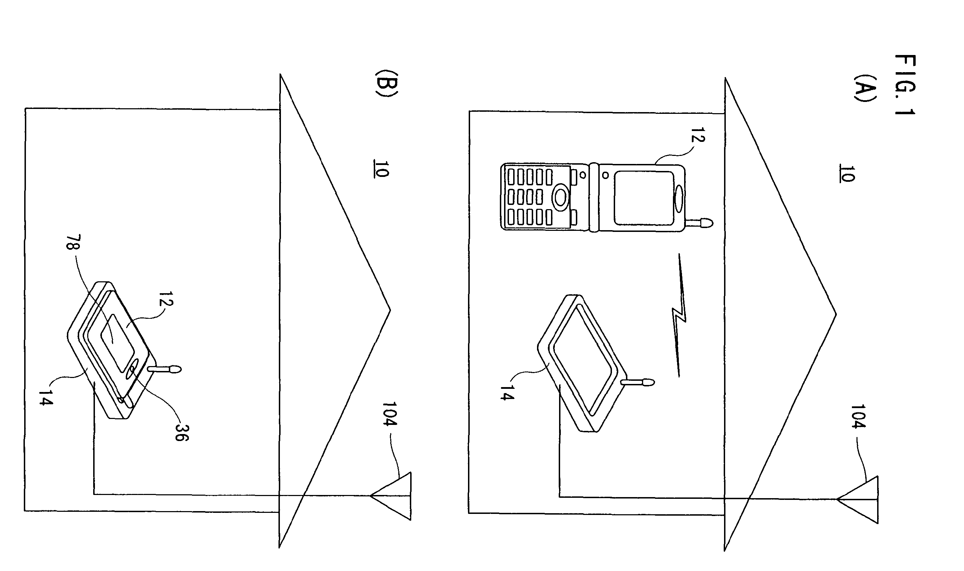

Referring to Figure 1(A), a content recording system 10 of this embodiment includes a mobile phone 12 and a cradle (also called as "base") 14. A user creates video recording reservation information of a desired TV program by operating the mobile phone 12, and sends the created video recording reservation information to the cradle 14 by utilizing Bluetooth. The cradle 14 receives through an antenna 104 broadcast data of a TV program that is on the air by use of a terrestrial digital television broadcasting (hereinafter, referred to as "television broadcasting") system on the basis of the received video recording reservation information, and records the received TV program.

Next, referring to Figure 1 (B), when the mobile phone 12 is set to the cradle 14, record data of the TV program recorded in the cradle 14 is transferred to the mobile phone 12. After completion of transferring the record data, a battery 80 of the mobile phone 12 is charged by the cradle 14. Thus, merely setting the mobile phone 12 to the cradle 14 allows the battery 80 to be charged as well as the record data of the TV program recorded in the cradle 14 to be transferred and reproduced. It is noted that the mobile phone 12 is provided with a lamp 36 for indicating a charge condition of the battery 80 by color and a monitor 78 for displaying a simple message in such positions so as to allow the user to confirm them in a state that the mobile phone 12 is set to the cradle 14. Accordingly, the user can know the charge condition of the battery 80 and information relating to the transfer of the record data even in a state that the mobile phone 12 is set to the cradle 14 to be described later.

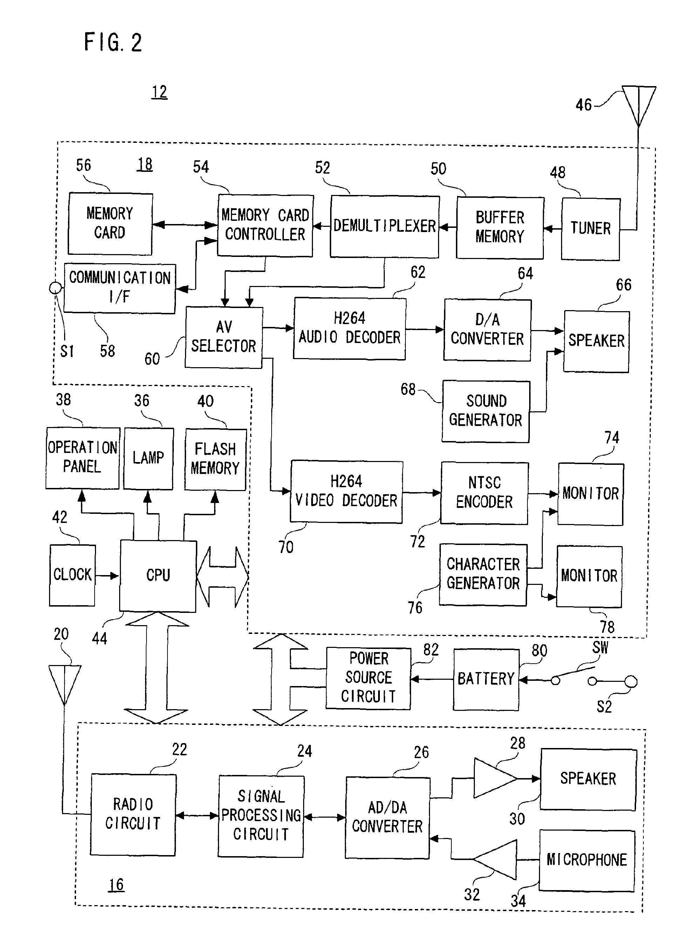

Referring to Figure 2, the mobile phone 12 includes a mobile communication circuit 16 for performing mobile communications by utilizing a mobile communication system, a broadcasting program receiving circuit 18 for receiving a TV program that is on the air by use of a television broadcasting system, and a CPU 44 for controlling both the mobile communication circuit 16 and the broadcasting program receiving circuit 18. The mobile communication circuit 16, the broadcasting program receiving circuit 18 and the CPU 44 are all driven by an electric power supplied from a power source circuit 82 on the basis of the battery 80.

When a dialing operation is performed through an operation panel 38, the CPU 44 instructs a radio circuit 22 provided in the mobile communication circuit 16 to perform a calling side process. This calling side process establishes a connection with an opponent party to yield a communicable state. When receiving a calling signal through the antenna 20, the radio circuit 22 informs the CPU 44 that the calling signal is received. The CPU 44 instructs a sound generator 68 provided in the broadcasting program receiving circuit 18 to output a sound message, and instructs a character generator 76 provided in the broadcasting program receiving circuit 18 to generate a character signal representing a calling message. Thus, the calling sound is output from a speaker 66, and the calling message is displayed on the monitor 74. When an incoming operation is performed through the operation panel 38 in response to such the sound message and the calling message, a connection is established with the opponent party to yield a communicable state.

When shifting to the communicable state, the sound signal taken by a microphone 34 is amplified by an amplifier 32, and converted into sound data of a digital signal by an AD/DA converter 26. The converted sound data is encoded into packet data, that is, a sound packet by a signal processing circuit 24. The encoded sound packet is modulated by the radio circuit 22. The modulated sound packet is transmitted to the opponent party via the antenna 20. A sound packet sent from the opponent party is received through the antenna 20, and demodulated by the radio circuit 22. The demodulated sound packet is decoded into sound data by the signal processing circuit 24, and the decoded sound data is converted into a sound signal being an analog signal by the AD/DA converter 26. The converted sound signal is output from the speaker 30 through an amplifier 28.

Next, a description is made on a case where a TV program is recorded. The CPU 44 activates the broadcasting program receiving circuit 18, and instructs a tuner 48 to tune in to a channel to be reserved for video recording. In this case, the tuner 48 extracts broadcast data of a desired channel out of the broadcast data taken by the antenna 46, and performs a demodulating process on the broadcast data of the extracted channel according to a MPEG format. Then, the demodulated broadcast data is applied to a demultiplexer 52 via a buffer memory 50.

The demultiplexer 52 extracts a sound packet and a video packet from the applied broadcast data, and applies the extracted sound packet and video packet to a memory card controller 54. The memory card controller 54 records the applied sound packet and video packet onto a memory card 56. This allows the record data of the TV program to be recorded onto the memory card 56.

Furthermore, a description is made on a case where the TV program recorded onto the memory card 56 is reproduced. The CPU 44 activates the broadcasting program receiving circuit 18, and instructs the memory card controller 54 to read the video packet and the sound packet consisting of the record data. The memory card controller 54 reads the sound packet and the video packet from the memory card 56, and applies the read sound packet and video packet to an AV selector 60. The AV selector 60 applies the applied sound packet and video packet to an H264 audio decoder 62 and an H264 video decoder 70, respectively.

The H264 audio decoder 62 decodes the applied sound packet to generate sound data, and applies the generated sound data to a D/A converter 64. The D/A converter 64 converts the applied sound data into a sound signal being an analog signal, and applies the converted sound signal to the speaker 66. Consequently, a sound of the TV program that is on the air in a desired channel is output from the speaker 66.

The H264 video decoder 70 decodes the applied video packet to generate video data, and applies the generated video data to an NTSC encoder 72. The NTSC encoder 72 converts the applied video data into a composite video signal, and applies the converted composite video signal to the monitor 74. Consequently, an image of the TV program that is on the air in a desired channel is displayed on the monitor 74. This allows the user to reproduce the TV program recorded onto the memory card 56.

Furthermore, a description is made in a case of directly viewing and listening to the TV program. Similar to a recording case, the tuner 48 applies broadcast data of a desired channel to the demultiplexer 52. The demultiplexer 52 extracts a sound packet and a video packet from the applied broadcast data, and applies the extracted sound packet and video packet to the AV selector 60. Then, the AV selector 60 applies the applied sound packet and video packet to the H264 audio decoder 62 and the H264 video decoder 70, respectively. Similar to reproducing, a sound and an image are output from the speaker 66 and the monitor 74, respectively. This allows the user to directly view and listen to the TV program.

The mobile phone 12 can exchange information such as the video recording reservation information, etc. with the cradle 14 via the radio circuit 22 by utilizing Bluetooth. Furthermore, the mobile phone 12, when set to the cradle 14, can receive the record data transferred from the cradle 14 via a terminal S1, and exchange the information with the cradle 14 via the terminal S1. The battery 80 of the mobile phone 12 is charged by power supplied from the cradle 14 via a terminal S2 and a switch SW. The detailed operation thereof will be described later.

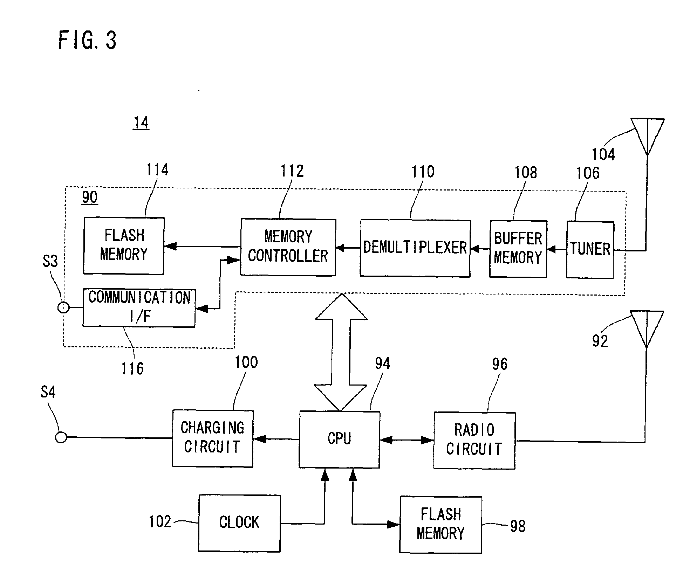

Referring to Figure 3, a description is made on an operation of the cradle 14 in a case of making a communication with the mobile phone 12 by utilizing Bluetooth. When information from the mobile phone 12 is received through an antenna 92, a radio circuit 96 informs a CPU 94 that the information from the mobile phone 12 has been received. When sending information to the mobile phone 12, the CPU 94 instructs the radio circuit 96 to send the information to the mobile terminal 12. The radio circuit 96 that is instructed to send sends the information to the mobile phone 12 via the antenna 92. This allows the cradle 14 to exchange the information with the mobile phone 12.

Next, a description is made on a case where the cradle 14 records a TV program. The CPU 94 activates a broadcast program receiving circuit 90 on the basis of the video recording reservation information received from the mobile phone 12 and time information obtained from a clock 102, and instructs a tuner 106 to tune in to a channel. In this case, the tuner 106 extracts broadcast data of a desired channel out of the broadcast data taken from the antenna 104, and performs a demodulating process on the broadcast data of the extracted channel according to an MPEG format. The tuner 106 applies the demodulated broadcast data to a demultiplexer 110 via a buffer memory 108. The demultiplexer 110 extracts a sound packet and a video packet from the applied broadcast data, and applies the extracted sound packet and video packet to a memory controller 112. The memory controller 112 records the applied sound packet and video packet in a flash memory 114. Thus, the record data is recorded in the flash memory 114.

Furthermore, the cradle 14, when being set the mobile phone 12, can transfer the record data to the mobile phone 12 via a terminal S3, and exchange the information with the mobile phone 12 via the terminal S3. The cradle 14 also supplies an electric power from a charging circuit 100 to the mobile phone 12 via a terminal S4 in order to charge the battery 80 of the mobile phone 12. The detailed operation thereof will be described later.

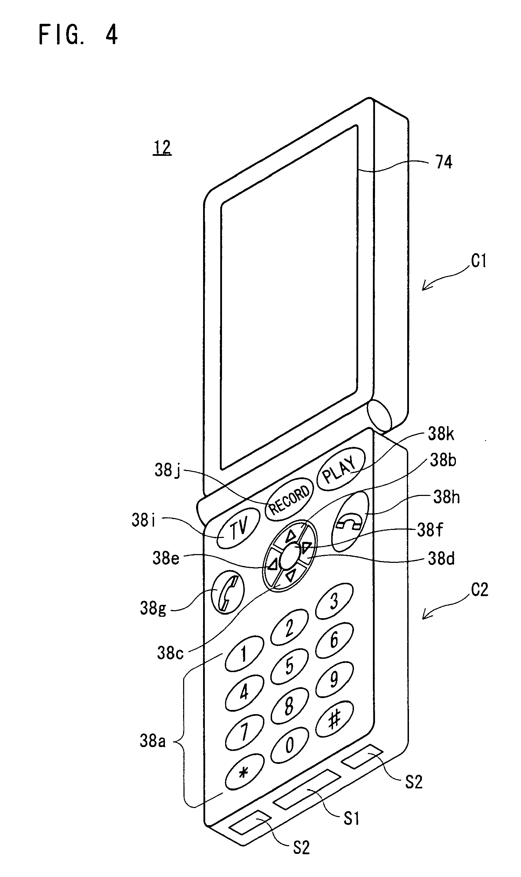

Referring to Figure 4, an appearance of the mobile phone 12 is explained. The mobile phone 12 consists of two cases C 1 and C2 such that it can be folded at a center thereof. The case C 1 is provided with the monitor 74. The monitor 74 displays a video recording reservation screen, an image of a recorded desired TV program, etc. On an opposite surface of the surface provided with the monitor 74 of the case C1, the lamp 36 and the monitor 78 are provided.

The case C2 has a numeric key pad 38a arranged in a lower portion thereof. The user inputs a channel number of a desired channel, characters, and a phone number, and so on by operating the numeric key pad 38a. Above the numeric key pad 38a, cursor keys 38b-38e each for moving a cursor to up and down and right and left direction are provided.

A set key38f is provided at a center surrounded by the cursor keys 38b-38e. The set key 38f is operated for determining a content selected by the cursor keys 38b, 38c. An off-hook key 38g is a key for being operated when a communication is started in response to an incoming call. An on-hook key 38g is a key for disconnecting a connection with a communication line at an end of communication, and functions as a power source key of the mobile phone 12.

Furthermore, above the cursor keys 38b-38e, a TV button 38i, a record button 38j and a play button 38k are provided. The TV button 38i is a button for turning on/off the power source of the tuner 44, and operating the TV button 38i permits starting and ending reception of the television broadcasting. The record button 38j is a button for displaying on the monitor 74 a video recording reservation setting screen to which video recording reservation information required to perform a video recording reservation of a TV program is input. The play button 38k is a button for reproducing the recorded TV program to display it on the monitor 74.

The mobile phone 12 has terminals S1 and S2 on its side surface. When the mobile phone 12 is set to the cradle 14, the terminal S 1 is connected to a terminal 3 of the cradle 14, and the terminal S2 is connected to a terminal S4 of the cradle 14. This allows the record data of the TV program recorded in the cradle 14 to be captured by the mobile phone 12 via the terminal S1, and the information to be exchanged with the cradle 14 via the terminal S1. Furthermore, an electric power is supplied from the cradle 14 via the terminal S2, so that the battery 80 is charged by the supplied electric power.

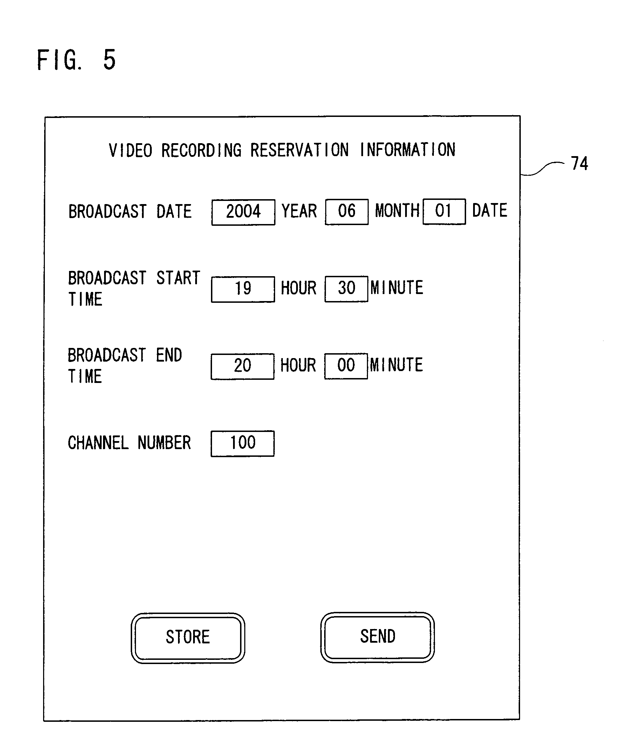

Referring to Figure 5, when the record button 38j is operated, the video recording reservation setting screen is displayed on the monitor 74. The user inputs the video recording reservation information to the video recording reservation setting screen with the use of the numeric key pad 38a and the cursor keys 38b-38e. That is, the user inputs to the video recording reservation setting screen a channel number of a channel in which a desired TV program is on the air, a broadcasting date, broadcast start time, and broadcast finish time of the TV program.

When the user operates a store key displayed at a lower left of the video recording reservation setting screen after inputting the video recording reservation information, the video recording reservation information input to the video recording reservation setting screen is recorded in the flash memory 40. The CPU 44 turns the power source of the tuner 48 on to start to record the program to be reserved for video recording on the basis of the time information applied from the clock 42 when the broadcast start time of the TV program has come, and finishes to record by turning the power source of the tuner 48 off when the broadcast finish time of the TV program has come. Consequently, the record data of the desired TV program is recorded onto the memory card 56 of the mobile phone 12, so that the user can view and listen to the recorded TV program by operating the play button 38k.

Furthermore, when the user operates a send key displayed at a lower right of the video recording reservation setting screen after inputting the video recording reservation information, the mobile phone 12 sends the video recording reservation information to the cradle 14 by utilizing Bluetooth, and the cradle 14 records the TV program on the basis of the received video recording reservation information.

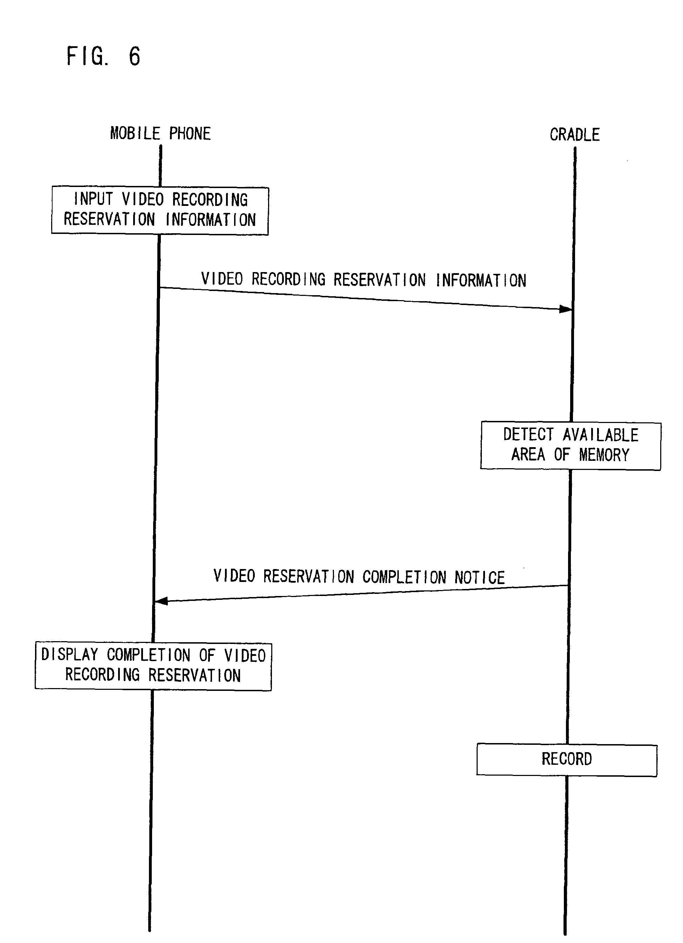

Referring to Figure 6, a description is made on a relationship between the mobile phone 12 and the cradle 14 when the video recording reservation information of a desired TV program is sent from the mobile phone 12 to the cradle 14, and the cradle 14 that has received the video recording reservation information records the TV program. First, when the video recording reservation setting screen is displayed on the monitor 74, the user inputs the video recording reservation information of the desired TV program by operating the numeric key pad 38a and the cursor keys 38b-38e. When the video recording reservation information is input, the mobile phone 12 sends the input video recording reservation information to the cradle 14.

The cradle 14 checks whether or not an available area that permits recording the record data is present in the flash memory 114 on the basis of the received video recording reservation information. In a case that the available area that permits recording the record data is present in the flash memory 114, the cradle 14 records the video recording reservation information in the flash memory 98, and sends a video recording reservation completion notice to the mobile phone 12. The mobile phone 12, when receiving the video recording reservation completion notice, displays a message of "the video recording reservation is performed on the cradle" on the monitor 74. The cradle 14 records in the flash memory 114 the record data of the desired TV program on the basis of the video recording reservation information recorded in the flash memory 98 and the time information applied from the clock 102. It is noted that sending and receiving of the information such as the video recording reservation information, etc. between the above-described mobile phone 12 and cradle 14 is all performed by utilizing Bluetooth.

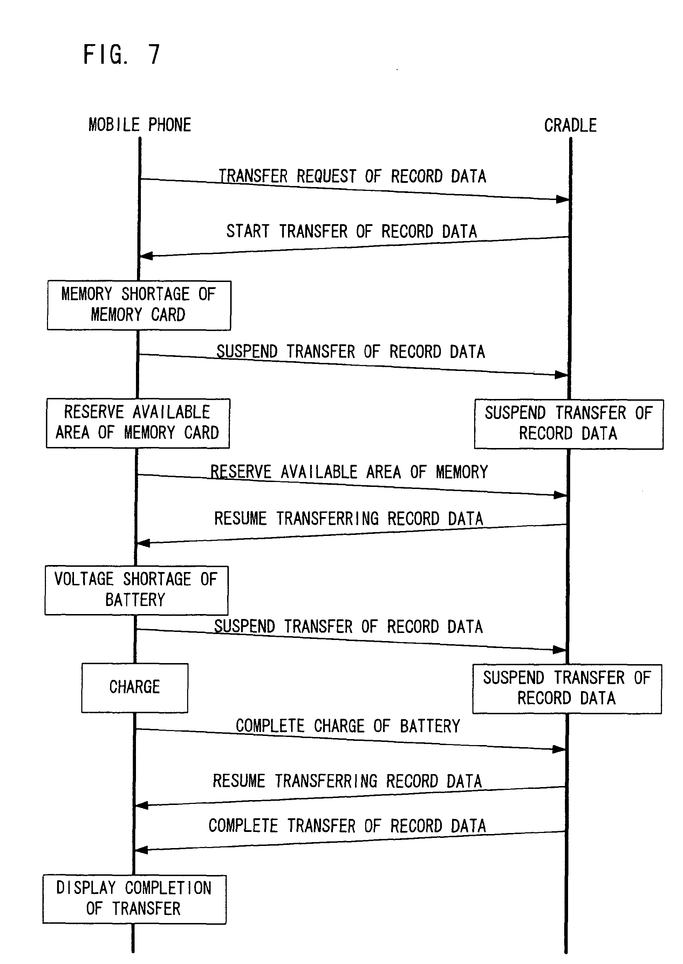

Referring to Figure 7, a description is made on a relationship between the mobile phone 12 and the cradle 14 in a case where the record data of the TV program recorded in the cradle 14 is transferred to the mobile phone 12. When the mobile phone 12 is set to the cradle 14, the mobile phone 12 requests the cradle 14 to transfer the record data. The cradle 14 which has received the transfer request starts to transfer the record data recorded in the flash memory 114 to the mobile phone 12.

The mobile phone 12, when detecting that the available area of the memory card 56 runs out during transfer of the record data, notifies the cradle 14 that the transfer of the record data will be suspended. The cradle 14, when receiving the transfer suspension notice, suspends the transfer of the record data to the mobile phone 12. The mobile phone 12 erases unnecessary record data in order to reserve an available area in the memory card 56. When the mobile phone 12 thus reserves the available area in the memory card 56, it notifies the cradle 14 that the available area is reserved. On the receipt of the notification, the cradle 14 resumes transferring the record data to mobile phone 12.

When the mobile phone 12 detects that a voltage of the battery 80 is lowered to such a degree that the record data transferred from the cradle 14 cannot be recorded onto the memory card 56, it notifies the cradle 14 that the transfer of the record data will be suspended. The cradle 14, when receiving the transfer suspension notice, suspends transfer of the record data to the mobile phone 12. The mobile phone 12 charges the battery 80 until the voltage of the battery 80 becomes a voltage that permits recording the record data transferred from the cradle 14 onto the memory card 56. After completion of charging the battery 80, the mobile phone 12 notifies the cradle 14 that the charge of the battery 80 is completed. The cradle 14 resumes transferring the record data to the mobile phone 12 when receiving the charge completion notice of the mobile phone 12.

Thus, after transferring all the record data recorded in the flash memory 114 to the mobile terminal 12, the cradle 14 informs the mobile phone 12 that the transfer of the record data has been completed. The mobile phone 12, when receiving the transfer completion notice from the cradle 14, displays a message of "the transfer of the record data has been completed" on the monitor 78.

It is noted that the notification of the information relating to the available area of the memory card 56 and the voltage of the battery 80 performed between the mobile phone 12 and cradle 14 are made via the terminal S 1 of the mobile phone 12 and the terminal S3 of the cradle 14 similar to the transfer of the record data. That is, in a case that the information is notified from the mobile phone 12 to the cradle 14, the information of the mobile phone 12 is applied to a communication I/F 58 by the CPU 44, and the information applied to the communication I/F 58 is applied to the cradle 14 via the terminal S1. The information applied to the cradle 14 is applied to a communication I/F 116 via the terminal S3, and the information applied to the communication I/F 116 is notified to the CPU 94. This allows the information to be notified from the mobile phone 12 to the cradle 14.

Similarly, in a case that the information is notified from the cradle 14 to the mobile phone 12, the information of the cradle 14 is applied to the communication I/F 116 by the CPU 94, and the information applied to the communication I/F 116 is applied to the mobile phone 12 via the terminal S3. The information applied to the mobile phone 12 is applied to the communication I/F 58 via the terminal S1, and the information applied to the communication I/F 58 is notified to the CPU 44. This allows the information to be notified from the cradle 14 to the mobile phone 12.

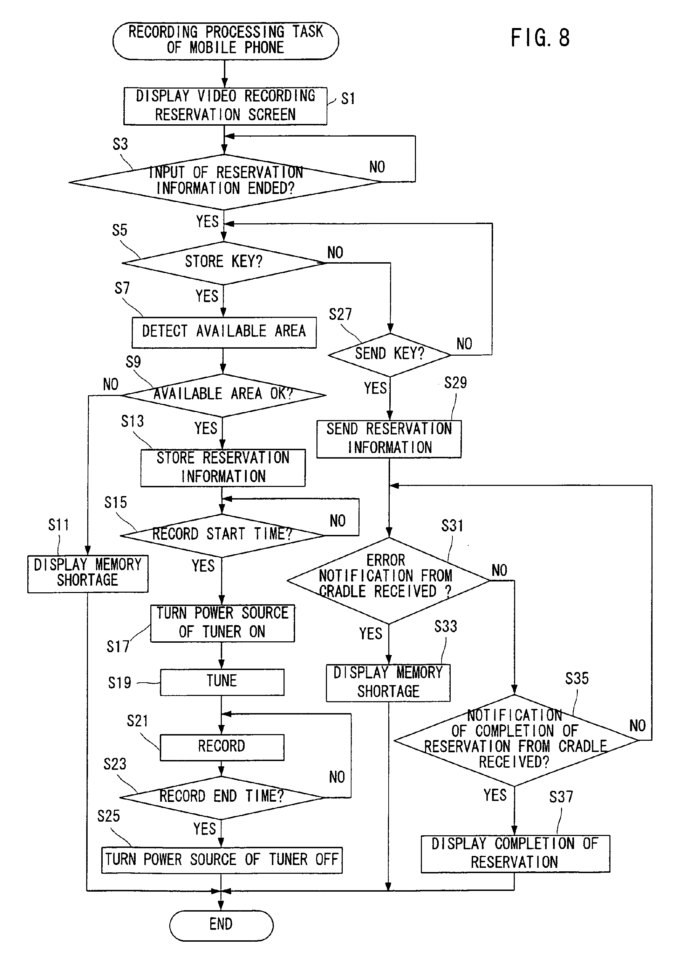

The CPU 44 of the mobile phone 12 executes a recording process shown in Figure 8 flowchart according to the control program recorded in the flash memory 40. In a step S1, a video recording reservation setting screen is displayed on the monitor 74. In a step S3, a waiting condition is kept until the video recording reservation information is input to the displayed video recording reservation setting screen. The input of the video recording reservation information is performed through the operation of the numeric key pad 38a and the cursor keys 38b-38e by the user.

In a step S5, it is determined whether or not the store key of the video recording reservation setting screen is operated. If "NO" is determined, the process proceeds to a step S27 described later. On the other hand, if "YES" is determined, the available area of the memory card 56 is detected in a step S7. In a step S9, it is determined whether or not the detected available area is large enough to record the record data of a desired TV program on the basis of the input video recording reservation information.

If "NO" is determined in the step S9, a message of "the recording is impossible because there is not enough memory in the mobile phone" is displayed on the monitor 74 in a step S11, and then, the process is ended. On the other hand, if "YES" is determined, the record data of the desired TV program can be recorded onto the memory card 56 on the basis of the video recording reservation information, and therefore, the video recording reservation information is recorded in the flash memory 40 in a step S13.

In a step S15, a waiting condition is kept until a record start time has come on the basis of the time information applied from the clock 42 and the recorded video recording reservation information. When the record start time has come, the power source of the tuner 48 is turned on in a step S17, and it is tuned in to a channel described in the video recording reservation information in a step S19. In a step S21, the record data of the TV program that is on the air in the tuned channel is recorded onto the memory card 56. Then, it is determined whether or not a record end time has come on the basis of the time information applied from the clock 42 and the recorded video recording reservation information in a step S23. If "NO" is determined, the process returns to the step S21. On the other hand, if "YES" is determined, the power source of the tuner 48 is turned off in a step S25 to end the process.

If "NO" in the step S5, that is, if it is determined that the store key of the video recording reservation setting screen is not operated, it is determined whether or not the send key of the video recording reservation setting screen is operated in a step S27. If "NO" is determined in the step S27, the process returns to the step S5. On the other hand, if "YES" is determined, the video recording reservation information is sent to the cradle 14 in a step S29. It is determined whether or not an error notice from the cradle 14 is received in a step S31. Here, the error notice from the cradle 14 means that the cradle 14, even if it intends to record a TV program on the basis of the video recording reservation information, cannot record the TV program due to less available area of the flash memory 114. If "YES" is determined, a message indicating that "there is not enough memory for the cradle to record" is displayed on the monitor 74, and then, the process is ended. On the other hand, if "NO" is determined in the step S31, it is determined whether or not the video recording reservation end notice is received from the cradle 14 in a step S35. If "NO" is thus determined, the process returns to the step S31. On the other hand, if "YES" is determined, the video recording reservation end notice indicating that "the video recording reservation is performed on the cradle" is displayed on the monitor 41 in a step S37, and then, the process is ended.

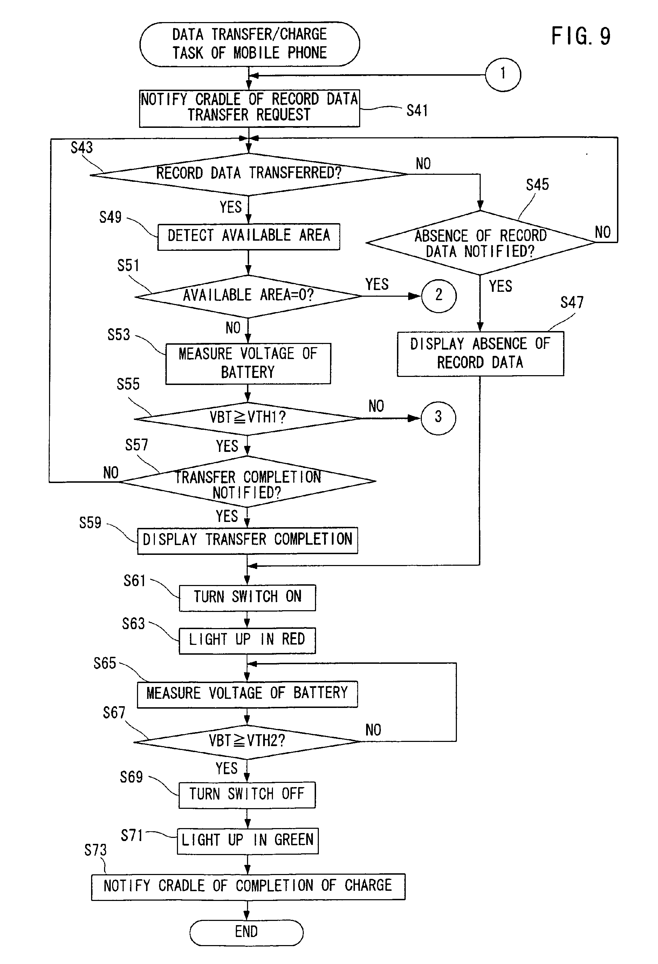

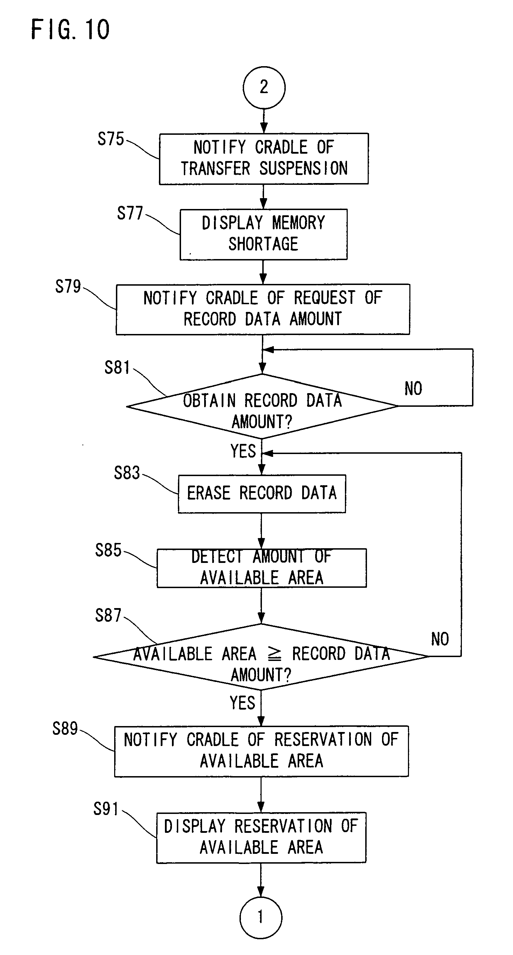

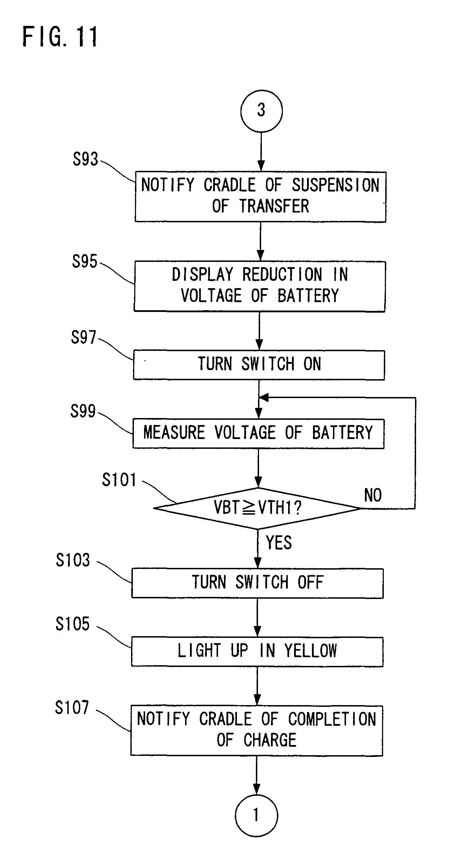

The CPU 44 of the mobile phone 12 further executes transfer of the record data and a charge process of the battery 80 shown in Figure 9-Figure 11 flowchart according to a control program recorded in the flash memory 40. When the mobile phone 12 is set to the cradle 14, it requests the cradle 14 to transfer the record data recorded in the flash memory 114 in a step S41. It is determined whether or not the record data is transferred from the cradle 14 in a step S43. If "NO" is thus determined, it is determined whether or not a notice notifying absence of the record data in the flash memory 114 is issued from the cradle 14. If "NO" in a step S45, the process returns to the step S43 while if "YES" is determined, a message indicating that "the TV program is not recorded in the cradle" is displayed on the monitor 78 in a step S47, and then, the process proceeds to a step S61 described later.

If "YES" in the step S43, that is, if the record data of the predetermined amount is transferred from the cradle 14, the available area of the memory card 56 is detected in a step S49. Then, it is determined whether or not the detected available area runs out in a step S51. If "YES" is thus determined, the process proceeds to a step S75 described later. On the other hand, if "NO" is determined, a voltage of the battery 80 is measured in a step S53, and it is determined whether or not the measured voltage of the battery 80 is above a threshold value VTH1 in a step S55. Here, the threshold value VTH1 is a voltage to be maintained at the minimum in the battery 80 in order to record the transferred record data onto the memory card 56.

If "NO" in the step S55, the process proceeds to a step S93 described later. On the other hand, if "YES" is determined, it is determined whether or not a transfer completion notice of the record data from the cradle 14 is present in a step S57. If "NO" in the step S57, the process returns to the step S43 to continue to transfer the record data. On the other hand, if "YES" is determined, since all the record data recorded in the flash memory 114 have been transferred to the mobile phone 12, a message indicating that "transfer of the record data is completed" is displayed on the monitor 78 in a step S59.

Next, in a step S61, the switch SW is turned on to start to charge the battery 80 from the cradle 14. In a step S63, the lamp 36 lights up in red in order to indicate that the battery 80 is during charging. This informs the user of the battery 80 being during charging. A voltage of the battery 80 is measured in a step S65, and it is determined whether or not the voltage of the measured battery 80 is above a threshold value VTH2 (threshold value VTH2 ≧ threshold value VTH1) in a step S67. If "NO" is thus determined, the process returns to the step S65, and if "YES" is determined, the switch SW is turned off in a step S69 to complete the charge of the battery 80. In a step S71, the lamp 36 lights up in green in order to inform completion of the charge of the battery 80. Then, in a step S73, the cradle 14 is notified that the charge of the battery 80 is completed, and the process is ended.

If "YES" in the step S51, that is, if the available area of the memory card 56 runs out to make it impossible to record the transferred record data, the process proceeds to a step S75. In the step S75, the cradle 14 is notified that the transfer of the record data is suspended. In a step S77, a message indicating that "there is not enough memory in the mobile phone to transfer the record data" is displayed on the monitor 78. In a step S79, the cradle 14 is requested to notify the amount of the record data recorded in the flash memory 114. Then, in a step S81, a waiting condition is kept until the amount of the record data is obtained from the cradle 14. In a step S83, data of the predetermined amount is erased from the record data recorded onto the memory card 56.

In a step S85, the amount of the available area of the memory card 56 is detected. In a step S87, it is determined whether or not the detected amount of the available area of the memory card 56 is above the data amount of the record data notified from the cradle 14. If "NO" is determined, the process returns to the step S83 to increase the available area by further erasing the record data in the memory card 56. On the other hand, if "YES" is determined, the cradle 14 is notified that a necessary available area is reserved in the memory card 56 in a step S89. In a step S91, a message indicating that "the available area necessary for the transfer of the record data has been reserved" is displayed on the monitor 78. This allows the user to know that the record data can be transferred. Thus, the available area necessary for transferring the record data is reserved in the memory card 56, and therefore, the process is returned to the step S41.

Furthermore, if "NO" in the step S55, that is, if the battery 80 runs out of the electric power required to record the transferred record data onto the memory card 56, the cradle 14 is notified that the transfer of the record data is suspended in a step S93. Furthermore, the message indicating that "the battery is too low in voltage to transfer the record data" is displayed on the monitor 78 in a step S95, and the switch SW is turned on in order to charge the battery 80 in a step S97. Thus, an electric power is supplied from the cradle 14 to the battery 80 via the terminal S2.

The voltage of the battery 80 is measured in a step S99, and it is determined whether or not the measured voltage of the battery 80 is above the threshold value VTH1 in a step S 101. If "NO" is thus determined, the process returns to the step S99 to measure the voltage of the battery 80 during charging. On the other hand, if "YES" is determined, the switch SW is turned off in a step S103 to end the charge of the battery 80. In a step S105, the lamp 36 provided on the mobile phone 12 lights up in yellow. This allows the user to know that the mobile phone 12 can record the transferred record data onto the memory card 56. In a step S107, the cradle 14 is notified that charge of the battery 80 has been finished, and the process returns to the step S41.

It is noted that in the above-described embodiment, after completion of transferring the record data to the mobile phone 12, the battery 80 is charged. However, as soon as the user knows that the transfer of the record data has been finished from the display of the monitor 78, he or she may remove the mobile phone 12 from the cradle 14.

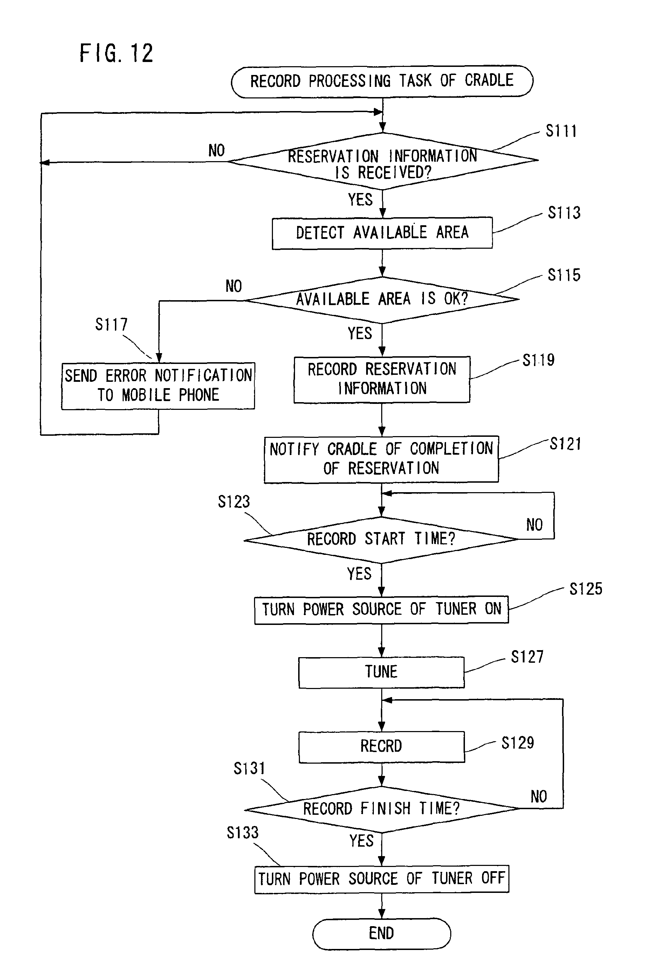

The CPU 94 of the cradle 14 further executes a recording process of a TV program according to the control program recorded in the flash memory 98 as shown in a flowchart in Figure 12. In a step S111, a waiting condition is kept until the video recording reservation information is received from the mobile phone 12. When the video recording reservation information is received, the available area of the flash memory 114 is detected in a step S113. In a step S115, it is determined whether or not the TV program to be reserved for video recording can be recorded in the available area of the flash memory 114 on the basis of the detected available area and the received video recording reservation information. If "NO" is thus determined, that is, if there is no available area for recording the received TV program in the flash memory 114, an error notice is sent to the mobile phone 12 by utilizing Bluetooth in a step S 117, and then, the process returns to the step S111.

On the other hand, if "YES" is determined in the step S 115, the received video recording reservation information is recorded in the flash memory 114 in a step S 119. In a step S121, a video recording reservation completion notice is sent to the mobile phone 12 by utilizing Bluetooth. Then, in a step S123, a waiting condition is kept until a record start time has come on the basis of the video recording reservation information and the time information applied from the clock 102. When the record start time has come, the power source of the tuner 106 is turned on in a step S125, and a channel described in the video recording reservation information is tuned in a step S127. In a step S129, a TV program being on the air at the tuned channel is recorded. In a step S131, it is determined whether or not the record finish time has come on the basis of the video recording reservation information and the time information applied from the clock 102. If "NO" is thus determined, the process returns to the step S129 to continue to record. On the other hand, if "YES" is determined, the process proceeds to a step S133 to turn the power source of the tuner 106 off and end the recording.

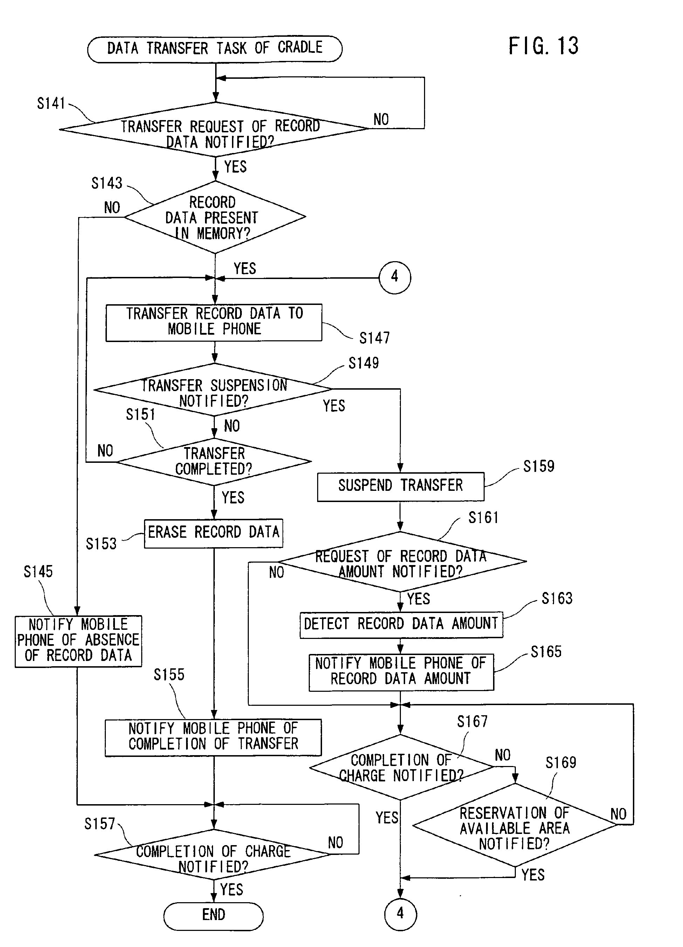

The CPU 94 of the cradle 14 executes a transfer processing of the record data shown in Figure 13 flowchart according to the control program recorded in the flash memory 98. When the mobile phone 12 is set to the cradle 14, a waiting condition is kept until a transfer request of the record data is notified from the mobile phone 12 in a step S141. When the transfer request of the record data is present, it is determined whether or not the record data is recorded in the flash memory 114 in a step S143. If "NO" is thus determined, the mobile phone 12 is notified that no record data is present in the flash memory 114 in a step S145, and then, the process proceeds to a step S157 described later. On the other hand, if "YES" is determined, the record data recorded in the flash memory 114 is sent to the mobile phone 12 by a predetermined data amount.

In a step S 149, it is determined whether or not a transfer suspension notice of the record data is present from the mobile phone 12. If "YES" is thus determined, the process proceeds to a step S159 described later, and if "NO" is determined, it is determined whether or not the transfer of the record data has been finished in a step S151. If "NO" in the step S151, the process returns to the step S147 to continue to transfer the record data. On the other hand, if "YES" is determined, the record data transferred to the mobile phone 12 is erased from the flash memory 114 in a step S153. In a step S 155, the mobile phone 12 is notified that the transfer of the record data has been finished. In the step S157, a waiting condition is kept until a charge completion notice of the battery 80 is present from the mobile phone 12, and after receiving the charge completion notice, the process is ended.

On the other hand, if "YES" is determined in the step S149, that is, if a transfer suspension notice of the record data is present from the mobile phone 12, the transfer of the record data is suspended in the step S159. Then, in a step S161, it is determined whether or not the notification of the record data amount recorded in the flash memory 114 is present from the mobile phone 12. If "NO" is thus determined, the process proceeds to a step S 167 described later. On the other hand, if "YES" is determined, the amount of the record data recorded in the flash memory 114 is detected in a step S163, and the detected record data amount is notified to the mobile phone 12 in a step S165.

In the step S167, it is determined whether or not the charge completion notice of the battery 80 is present from the mobile phone 12, that is, it is determined whether or not a notification notifying that the voltage of the battery 80 is above the threshold value VTH1 is present. If "YES" is thus determined, the process returns to the step S147 to send the record data to the mobile phone 12. On the other hand, if "NO" is determined, it is determined whether or not a notification notifying that the available area is reserved in the memory card 56 is present in a step S169. If "NO" is determined in the step S169, the process returns to the step S167 while if "YES" is determined, the process returns to the step S 147 in order to send the record data to the mobile phone 12.

As understood from the above description, the cradle 14 receives a TV program, and records the received record data of the TV program in the flash memory 114. Then, the cradle 14, when being set with the mobile phone 12, sends the record data recorded in the flash memory 114 to the mobile phone 12. The mobile phone 12 accepts the record data transferred from the cradle 14, and records the accepted record data onto the memory card 56. That is, by merely setting the mobile phone 12 to the cradle 14, the record data recorded by the cradle 14 is transferred to the mobile phone 12 so as to be stored. Thus, it is possible to simplify the transfer control from the cradle 14 to the mobile terminal 12.

Furthermore, when detecting that an available area runs out in the memory card 56 during the transfer of the record data from the cradle 14 to the mobile phone 12, the mobile phone 12 requests the cradle 14 to suspend transfer of the record data. Then, when an available area is reserved in the memory card 56 by erasing unnecessary record data in the memory card 56, the cradle 14 transfers the record data. In this case, even if the available area of the memory card 56 runs out during transfer of the record data, the mobile phone 12 records the record data transferred from the cradle 14 onto the memory card 56 by automatically reserving the available area.

Furthermore, when detecting that the voltage of the battery 80 is below the first threshold value VTH1 during the transfer of the record data from the cradle 14 to the mobile phone 12, the mobile phone 12 requests the cradle 14 to suspend the transfer of the record data. Then, if the battery 80 is charged to make the voltage of the battery 80 above the first threshold value VTH1, the mobile phone 12 causes the cradle 14 to transfer the record data. In this case, even if the voltage of the battery 80 is below the first threshold value VTH1 during transfer of the record data, the mobile phone 12 can record the record data transferred form the cradle 14 onto the memory card 56 by automatically charging the battery 80.

It is noted that in the above-described embodiment, the video recording reservation information is sent from the mobile phone 12 to the cradle 14 by utilizing Bluetooth. However, by assigning the phone number to the cradle 14, the video recording reservation information may be sent over the telephone line. In this case, the mobile phone 12 forces the cradle 14 to record a desired TV program irrespective of the distance between the mobile phone 12 and the cradle 14.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A mobile terminal recording system including a mobile terminal and a base to which said mobile terminal is set, wherein
said mobile terminal includes:
a content acceptor for accepting a content transferred from said base; and
a first recorder for recording the content accepted by said content acceptor, and
said base includes:
a content receiver for receiving a content;
a second recorder for recording the content received by said content receiver; and
a first data transferor for transferring the content recorded in said second recorder to said mobile terminal when said mobile terminal is set.

2. A mobile terminal recording system according to claim 1, wherein
said mobile terminal further includes:
a message receiver for receiving an unrecordable message from said base; and
a first display for displaying the unrecordable message received by said message receiver, and
said base further includes:
a first capacity detector for detecting an available area of said second recorder;
a first determiner for determining whether or not the detected available area of said second recorder is larger than a data amount of the content calculated on the basis of video recording reservation information; and
a message sender for sending an unrecordable message to said mobile terminal when the determination result by said first determiner is negative.

3. A mobile terminal recording system according to claim 1 or 2, wherein
said mobile terminal further includes:
a second capacity detector for detecting an available area of said first recorder;
a first transfer suspension requestor for requesting said base to suspend transfer of the content when the available area of said first recorder cannot be detected by said second capacity detector;
a first data eraser for erasing the content recorded in said first recorder; and
a first transfer requestor for requesting said base to transfer the content when the available area is reserved in said first recorder by said first data eraser, and
said base, further includes:
a first suspension request acceptor for accepting the transfer suspension request from said mobile terminal;
a first data transfer suspender for suspending transfer of the content to said mobile terminal on the basis of the transfer suspension request accepted by said first suspension request acceptor;
a first transfer request acceptor for accepting a transfer request of the content from said mobile terminal; and
a second data transferor for transferring the content recorded in said second recorder to said mobile terminal on the basis of the transfer request of the content accepted by said first transfer request acceptor.

4. A mobile terminal recording system according to any one of claims 1 to 3, wherein
said mobile terminal, further includes:
a message acceptor for accepting a transfer finish message of the content notified from said base; and
a second display for displaying said transfer finish message accepted by said message acceptor, and
said base, further includes:
a second data eraser for erasing the content recorded in said second recorder after completion of transferring the content recorded in said second recorder by said data transferor; and
a message notifier for notifying the transfer finish message to said mobile terminal.

5. A mobile terminal recording system according to any one of claims 1 to 4, wherein
said mobile terminal, further includes:
a battery for supplying an electric power to said mobile terminal;
a first measure for measuring a voltage of said battery;
a second determiner for determining whether or not the voltage measured by said first measure is larger than a first threshold value;
a second transfer suspension requester for requesting said base to suspend transfer of the content when the determination result by said second determiner is negative;
a first charger for charging said battery; and
a second transfer requester for requesting said base to transfer the content when the determination result by said second determiner becomes affirmative through the charge by said first charger, and
said base, further includes:
a second suspension request acceptor for accepting the transfer suspension request of the content from said mobile terminal;
a second data transfer suspender for suspending the transfer of the content to said mobile terminal on the basis of the transfer suspension request accepted by said second suspension request acceptor;
a second transfer request acceptor for accepting the transfer request of the content from said mobile terminal; and
a third data transferor for transferring the content to said mobile terminal when the transfer request is accepted by said second transfer request acceptor.

6. A mobile terminal recording system according to any one of claims 1 to 5, wherein
said mobile terminal, further includes:
a second measure for measuring a voltage of said battery;
a third determiner for determining whether or not the voltage measured by said second measure is larger than a second threshold value being larger than the first threshold value;
a second charger for charging said battery when the determination result by said third determiner is negative; and
a third display for displaying completion of the charge of said battery when the determination result by said third determiner becomes affirmative through the charge by said second charger, and
said base further includes an electric power supplier for supplying an electric power to said second charger.

7. A mobile terminal recording system according to any one of claims 1 to 6, wherein said first threshold value is a voltage of said battery required to record the content transferred from at least said base in said first recorder.

8. A mobile terminal recording system according to any one of claims 1 to 7, wherein sending and receiving the unrecordable message by said message sender and said message receiver are sent and received through Bluetooth.

9. A mobile terminal recording system according to any one of claims 1 to 7, wherein sending and receiving the unrecordable message by said message sender and said message receiver are sent and received over a telephone line.

10. A method of recording a content by a mobile terminal recording system including a mobile terminal and a base to which said mobile terminal is set, comprising following steps of:
(a) receiving a content by said base;
(b) recording the received content in a first recording medium of said base;
(c) transferring the content recorded in said first recording medium to said mobile terminal when said mobile terminal is set to said base;
(d) accepting the content transferred from said base by said mobile terminal; and
(e) recording the accepted content in said second recording medium of said mobile terminal.

11. A method of recording a content by a mobile terminal recording system according to claim 10, comprising following steps of:
(a) detecting an available area of said first recording medium by said base;
(b) determining whether or not the available area of said detected first recording medium is larger than a data amount of the content calculated on the basis of video recording reservation information;
(c) sending an unrecordable message to said mobile terminal when the determination result is negative;
(d) receiving the unrecordable message from said base by said mobile terminal; and
(e) displaying the received unrecordable message on said mobile terminal.

12. A method of recording a content by a mobile terminal recording system according to claim 10 or 11, comprising following steps of:
(a) detecting an available area of said second recording medium by said mobile terminal;
(b) requesting said base to suspend the transfer of the content when the available area of said second recording medium cannot be detected;
(c) accepting the transfer suspension request from said mobile terminal by said base;
(d) suspending the transfer of the content to said mobile terminal on the basis of the accepted transfer suspension request;
(e) erasing the content recorded in said second recording medium;
(f) requesting said base to transfer the content when the available area is reserved in said second recording medium;
(g) accepting the transfer request of the content from said base by said mobile terminal; and
(h) transferring the content recorded in said first recording medium to said mobile terminal on the basis of the accepted transfer request of the content.

13. A method of recording a content by a mobile terminal recording system according to any one of claims 10 to 12,
(a) measuring a voltage of a battery supplying an electric power to said mobile terminal by said mobile terminal,
(b) determining whether or not the measured voltage is larger than a threshold value;
(c) requesting said base to suspend the transfer of the content when the determination result is negative,
(d) accepting the transfer suspension request of the content from said mobile terminal by said base;
(e) suspending the transfer of the content to said mobile terminal on the basis of the accepted transfer suspension request;
(f) charging said battery by said base;
(g) requesting said base to transfer the content when the determination result after charge is affirmative;
(h) accepting the transfer request of the content from said mobile terminal by said base; and
(i) transferring the content to said mobile terminal when the transfer request is accepted.
